(19) Europäisches Patentamt

European Patent Office

Office européen des brevets

(11) **EP 1 202 088 A1**

(12) **DEMANDE DE BREVET EUROPEEN**

(43) Date de publication:
**02.05.2002 Bulletin 2002/18**

(51) Int Cl.⁷: **G02B 6/16**

(21) Numéro de dépôt: **01402628.0**

(22) Date de dépôt: **11.10.2001**

| | |
|---|---|
| (84) Etats contractants désignés:<br>**AT BE CH CY DE DK ES FI FR GB GR IE IT LI LU MC NL PT SE TR**<br>Etats d'extension désignés:<br>**AL LT LV MK RO SI** | • **Nouchi, Pascale**<br>**78600 Maisons Laffitte (FR)**<br>• **Sillard, Pierre**<br>**78150 Le Chesnay (FR)**<br>• **Gorlier, Maxime**<br>**75017 Paris (FR)**<br>• **Fleury, Ludovic**<br>**78390 Bois D'Arcy (FR)** |
| (30) Priorité: **26.10.2000 FR 0013724** | |
| (71) Demandeur: **ALCATEL**<br>**75008 Paris (FR)** | (74) Mandataire: **Laroche, Danièle et al**<br>**COMPAGNIE FINANCIERE ALCATEL**<br>**Dépt. Propriété Industrielle,**<br>**30, avenue Kléber**<br>**75116 Paris (FR)** |
| (72) Inventeurs:<br>• **De Montmorillon, Louise-Anne**<br>**75017 Paris (FR)**<br>• **Beaumont, Florent**<br>**78700 Conflans Ste Honorine (FR)** | |

(54) **Fibre optique pour la compensation en ligne de la dispersion chromatique d'une fibre optique à dispersion chromatique positive**

(57) L'invention propose une fibre optique qui présente pour une longueur d'onde de 1550 nm une dispersion chromatique comprise entre -12 et -4 ps/(nm. km) et un rapport entre la dispersion chromatique et la pente de dispersion chromatique entre 250 et 370 nm. Elle présente un profil en rectangle ou trapèze avec une tranchée enterrée et un anneau.

L'invention concerne aussi un système de transmission à fibre optique, utilisant une telle fibre pour compenser en ligne la dispersion chromatique cumulée dans une fibre de ligne ayant autour de 1550 nm une dispersion chromatique comprise entre 5 et 11 ps/(nm. km) et un rapport entre la dispersion chromatique et la pente de dispersion chromatique entre 250 et 370 nm.

FIG_2

EP 1 202 088 A1

## Description

La présente invention concerne le domaine des transmissions par fibre optique, et plus spécifiquement, la compensation de la dispersion chromatique et de la pente de dispersion chromatique dans des systèmes de transmission par fibre optique.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 40Gbit/s ou à 160Gbit/s ;l'objectif est d'obtenir, pour toutes les valeurs de longueur d'onde du multiplex, une dispersion chromatique cumulée sensiblement nulle sur la liaison, de sorte à limiter l'élargissement des impulsions. Une valeur cumulée de quelques dizaines de ps/nm pour la dispersion est en général acceptable. Il est aussi intéressant d'éviter au voisinage des longueurs d'onde utilisées dans le système les valeurs nulles de la dispersion chromatique locale, pour lesquelles les effets non-linéaires sont plus importants. Enfin, il est aussi intéressant de limiter la pente de dispersion chromatique cumulée sur la plage du multiplex de sorte à éviter ou limiter les distorsions entre les canaux du multiplex.

On utilise classiquement comme fibre de ligne pour les systèmes de transmission à fibres optiques des fibres à saut d'indice, appelées aussi fibres SMF (acronyme de l'anglais "Single Mode Fiber"). La demanderesse commercialise ainsi sous référence ASMF 200 une fibre monomode à saut d'indice présentant une longueur d'onde $\lambda_0$ d'annulation de la dispersion chromatique entre 1300 et 1320 nm, et une dispersion chromatique inférieure ou égale à 3,5 ps/(nm.km) dans une plage de 1285-1330 nm, et de l'ordre de 17 ps/(nm.km) à 1550 nm. La pente de dispersion chromatique à 1550 nm est de l'ordre de 0,06 ps/(nm$^2$.km).

Sont aussi apparues sur le marché des fibres à dispersion décalée, ou DSF (acronyme de l'anglais "Dispersion shifted fibers"). Ces fibres sont telles qu'à la longueur d'onde de transmission à laquelle elles sont utilisées, qui est en général différente de la longueur d'onde de 1,3 µm pour laquelle la dispersion de la silice est sensiblement nulle, la dispersion chromatique est sensiblement nulle; c'est à dire que la dispersion chromatique de la silice, non nulle, est compensée - d'où l'emploi du terme décalé - par une augmentation de l'écart d'indice Δn entre le coeur de la fibre et la gaine optique. Cet écart d'indice permet de décaler la longueur d'onde pour laquelle la dispersion chromatique est nulle; il est obtenu par l'introduction de dopants dans la préforme, lors de la fabrication de celle-ci, par exemple par un processus de MCVD connu en soi, et qui n'est pas décrit plus en détail ici.

On qualifie de NZ-DSF+ (acronyme de l'anglais "non-zero dispersion shifted fibers") des fibres à dispersion décalée, présentant une dispersion chromatique non-nulle et positive pour les longueurs d'onde auxquelles elles sont utilisées, typiquement autour de 1550 nm. Ces fibres présentent pour ces longueurs d'onde une dispersion chromatique faible, typiquement inférieure à 11 ps/(nm.km) à 1550 nm, et une pente de dispersion chromatique entre 0,04 et 0,1 ps/(nm$^2$.km).

FR-A2 790 107 propose une fibre de ligne, tout particulièrement adaptée à une transmission à multiplexage en longueurs d'onde dense, avec un espacement entre les canaux de 100 GHz ou moins pour un débit par canal de 10 Gbit/s; cette fibre présente pour une longueur d'onde de 1550 nm une surface effective supérieure ou égale à 60 µm$^2$, une dispersion chromatique comprise entre 6 et 10 ps/(nm.km), et une pente de dispersion chromatique inférieure à 0,07 ps/(nm$^2$.km).

La demande de brevet français n° 0002316 déposée le 24/02/2000 et intitulée "Fibre optique monomode en câble pour réseaux de transmission à fibre optique à multiplexage en longueurs d'onde" propose une fibre de ligne présentant à 1550 nm une dispersion chromatique entre 5 et 11 ps/(nm.km), un rapport entre la dispersion chromatique et la pente de dispersion chromatique entre 250 et 370 nm et un rapport entre le carré de la surface effective et la pente de dispersion chromatique supérieur à 8.10$^4$ µm$^2$.nm$^2$.km/ps. Cette fibre de ligne a une plage d'utilisation de 1300 à 1625 nm. Dans un exemple de cette demande, elle est compensée en dispersion par une fibre de compensation de dispersion présentant une dispersion chromatique de -100 ps/(nm.km) et un rapport entre la dispersion chromatique et la pente de dispersion chromatique de 260 nm.

Pour compenser la dispersion chromatique et la pente de dispersion chromatique dans des fibres SMF ou NZ-DSF+ utilisées comme fibres de ligne, il est connu d'utiliser des faibles longueurs de fibre de compensation de dispersion ou DCF (Dispersion Compensating Fiber en langue anglaise). Un exemple d'un tel système de transmission, dans lequel la dispersion chromatique dans une fibre de ligne SMF est compensée par de la fibre DCF est décrit dans M. Nishimura et autres, Dispersion compensating fibers and their applications, OFC'96 Technical Digest ThA1. Un tel usage d'une fibre de compensation de dispersion est aussi mentionné dans L. Grüner-Nielsen et autres, Large volume Manufacturing of dispersion compensating fibers, OFC'98 Technical Digest TuD5. Les inconvénients de ce type de fibre sont leur coût élevé, leur forte sensibilité à la PMD et au câblage.

Des fibres DCF sont décrites dans différents brevets. Elles présentent au voisinage d'une longueur d'onde de 1550 nm une dispersion chromatique négative, pour compenser la dispersion chromatique cumulée dans la fibre de ligne, et peuvent en outre présenter une pente de la dispersion chromatique négative pour compenser la pente positive de la dispersion chromatique de la fibre de ligne.

US-A-5 568 583 ou US-A-5 361 319 proposent une fibre DCF pour la compensation de la dispersion chromatique d'une fibre SMF, d'une dispersion de l'ordre de 17 ps/(nm.km) à 1550 nm.

WO-A-99 13366 propose une fibre de compensation de dispersion, qui est destinée à être utilisée dans des boîtiers de compensation, pour compenser la dispersion chromatique et la pente de dispersion chromatique d'une fibre du type commercialisé par la société Lucent sous la marque "True Wave"; cette fibre présente une dispersion chromatique entre 1,5 et 4 ps/(nm.km) et une pente de dispersion chromatique de 0,07 ps/(nm$^2$.km). La fibre de compensation de dispersion proposée présente dans un exemple de réalisation une dispersion chromatique de -27 ps/(nm.km) et une pente de dispersion chromatique de -1,25 ps/(nm$^2$.km).

EP-A-0 674 193 propose une fibre de compensation de dispersion, présentant une valeur de dispersion chromatique entre -85 et -20 ps/(nm.km); des exemples comparatifs de profils avec des valeurs de dispersion entre -20 et 0 ps/(nm.km) sont proposés dans les figures; la pente de dispersion chromatique est positive ou très faiblement négative pour ces exemples comparatifs.

US-A-5 838 867 propose une-fibre de dispersion de compensation, destinée à compenser en ligne ou en boîtier la dispersion chromatique d'une fibre de ligne à dispersion décalée.

Il a encore été proposé dans K. Mukasa et autres, Novel network fiber to manage dispersion at 1.55 µm with combination of 1.3 µm zero dispersion single mode fiber, ECOC 97, 22-25 September 1997, Conference publication No 448, une fibre appelée RDF (ou "Reverse Dispersion Fiber"), qui présente des propriétés de dispersion chromatique et de pente de dispersion chromatique inverses de celles d'une fibre de ligne SMF. Cette fibre présente à 1550 nm une dispersion chromatique de -15,6 ps/(nm.km), et une pente de dispersion chromatique de -0,046 ps/(nm$^2$.km), soit un rapport entre la dispersion chromatique et la pente de dispersion chromatique de l'ordre de 340nm. Elle a un profil d'indice en W, avec au centre un sommet, entouré d'une tranchée d'indice inférieur à celui de la gaine. Dans cette publication la fibre RDF est utilisée comme fibre de ligne, en alternance avec la fibre SMF: la dispersion chromatique et la pente de dispersion chromatique cumulées dans une section de fibre SMF sont compensées par la propagation dans la section suivante de fibre RDF. Un tel enseignement apparaît aussi dans FR-A-2 761 483. Les exemples de profils fournis dans cette demande sont tous des profils à saut d'indice, avec dans la plupart des cas une gaine enterrée.

L'invention propose une nouvelle fibre qui peut être utilisée pour la compensation de la dispersion chromatique de la fibre proposée dans la demande n° 0002316 précitée. Par rapport à la fibre proposée dans l'article de Mukasa, elle présente une atténuation plus faible, et une surface effective plus importante; elle peut être utilisée plus facilement comme fibre de ligne dans un système de transmission. En outre, la fibre de l'invention peut être utilisée sur une bande plus large que la fibre proposée dans l'article de Mukasa.

Plus précisément, l'invention propose une fibre optique présentant pour une longueur d'onde de 1550 nm une dispersion chromatique entre -12 et -4 ps/(nm.km) et un rapport entre la dispersion chromatique et la pente de dispersion chromatique entre 250 et 370 nm.

La fibre de l'invention peut avantageusement présenter une ou plusieurs des caractéristiques de propagation suivantes:

- pour une longueur d'onde de 1550 nm une surface effective supérieure à 20 µm$^2$, de préférence supérieure où égale à 30 µm$^2$;
- pour des longueurs d'onde entre 1300 et 1620 nm, et de préférence entre 1300 et 1650nm, des pertes par courbure inférieures ou égales à 0,05 dB, de préférence inférieures ou égales à 0,001 dB après un enroulement de 100 tours autour d'un mandrin de 30mm de rayon;
- pour des longueurs d'onde entre 1300 et 1620 nm, et de préférence entre 1300 et 1650nm, des pertes par courbure inférieures ou égales à 100dB/m, pour un rayon de courbure de 10mm;
- pour des longueurs d'onde entre 1300 et 1620 nm, et de préférence entre 1300 et 1650nm, une sensibilité aux micro-courbures inférieure ou égale à 1, et de préférence inférieure ou égale à 0,5;
- pour des longueurs d'onde entre 1300 et 1620 nm, et de préférence entre 1300 et 1650nm, une atténuation inférieure ou égale à 0,30 dB/km, et de préférence inférieure ou égale à 0,25 dB/km;
- une longueur d'onde de coupure en câble inférieure ou égale à 1400 nm, de préférence inférieure ou égale à 1300 nm;
- une dispersion modale de polarisation inférieure ou égale à 0,1 ps.km$^{-1/2}$.

  La fibre présente de préférence un profil d'indice en rectangle ou trapèze avec une tranchée enterrée et un anneau. Ce profil peut être caractérisé en ce que

- l'indice ($\Delta n_1$) de la partie centrale de la fibre en trapèze ou en rectangle est compris entre $9,5.10^{-3}$ et $11,6.10^{-3}$, et en ce que le rayon ($r_1$) de la partie centrale de la fibre d'indice supérieur à l'indice de la gaine est compris entre 2,4 et 2,9 $\mu$m;
- l'indice ($\Delta n_2$) de la tranchée enterrée est compris entre $-6,9.10^{-3}$ et $-3,1.10^{-3}$, et en ce que le rayon extérieur ($r_2$) de cette tranchée enterrée est compris entre 4,8 et 6,9 $\mu$m;
- l'indice ($\Delta n_3$) de l'anneau est compris entre $1,5.10^{-3}$ et $8,4.10^{-3}$, et en ce que le rayon extérieur ($r_3$) de cet anneau est compris entre 7,5 et 10,2 $\mu$m.

Dans le cas d'un profil d'indice avec une partie centrale en trapèze, le rapport entre le rayon ($r_{1a}$) de la petite base du trapèze et le rayon ($r_{1b}$) de la grande base du trapèze est de préférence compris entre 0,8 et 1.

Il est aussi possible que la fibre présente un profil d'indice en trapèze avec une tranchée enterrée et un anneau avec un rapport entre le rayon ($r_{1a}$) de la petite base du trapèze et le rayon ($r_{1b}$) de la grande base du trapèze compris entre 0,6 et 0,8. Dans ce cas, le profil peut être caractérisé en ce que :

- l'indice ($\Delta n_1$) de la partie centrale de la fibre en trapèze est compris entre $9,8.10^{-3}$ et $11,6.10^{-3}$, et en ce que le rayon ($r_1$) de la partie centrale de la fibre d'indice supérieur à l'indice de la gaine est compris entre 2,5 et 2,9 $\mu$m;
- l'indice ($\Delta n_2$) de la tranchée enterrée est compris entre $-7,0.10^{-3}$ et $-3,2.10^{-3}$, et en ce que le rayon extérieur ($r_2$) de cette tranchée enterrée est compris entre 4,7 et 7,0 $\mu$m;
- l'indice ($\Delta n_3$) de l'anneau est compris entre $1,5.10^{-3}$ et $8,5.10^{-3}$, et en ce que le rayon extérieur ($r_3$) de cet anneau est compris entre 7,5 et 10,2 $\mu$m.

L'invention propose encore l'utilisation d'une telle fibre comme fibre de compensation de dispersion dans un système de transmission à fibre optique à multiplexage en longueur d'onde. Cette fibre peut être câblée et utilisée comme fibre de ligne.

L'invention propose enfin un système de transmission à fibre optique à multiplexage en longueur d'onde, comprenant une première section de fibre de ligne, et une deuxième section de fibre de ligne, la deuxième section étant constituée de la fibre précédemment définie.

Avantageusement, la fibre de ligne de la première section présente dans ce cas pour une longueur d'onde de 1550 nm une dispersion chromatique entre 5 et 11 ps/(nm.km), une pente de dispersion chromatique entre 0,01 et 0,04 ps/(nm$^2$.km), une surface effective entre 50 et 70 $\mu$m$^2$, et/ou un rapport de la dispersion chromatique à la pente de dispersion chromatique entre 250 et 370 nm.

Il est aussi préférable que le rapport de la longueur de la première section à la longueur de la seconde section soit sensiblement l'inverse de la valeur absolue du rapport des dispersions chromatiques à 1550 nm des fibres de la première section et de la deuxième section.

Dans un mode de réalisation du système, la dispersion chromatique cumulée pour une longueur d'onde entre 1450 et 1620 nm, de préférence entre 1450 et 1650nm est inférieure à 100 ps/nm, et de préférence inférieure à 50 ps/nm, en moyenne sur 100 km de transmission. D'autres caractéristiques et avantages de l'invention apparaîtront à la lecture de la description qui suit de modes de réalisation de l'invention, donnés à titre d'exemple et en référence aux dessins annexés, qui montrent

- figure 1, une représentation schématique d'un système de transmission selon l'invention ;
- figure 2, une représentation schématique du profil d'indice de consigne d'une fibre selon un premier mode de réalisation de l'invention.
- figure 3, une représentation schématique du profil d'indice de consigne d'une fibre d'un deuxième mode de réalisation de l'invention

L'invention propose une fibre qui présente à 1550 nm une dispersion chromatique entre -12 et -4 ps/(nm.km), et un rapport entre la dispersion chromatique et la pente de dispersion chromatique compris entre 250 et 370 nm, pour cette même valeur de longueur d'onde.

La fibre de l'invention peut être utilisée comme fibre de ligne dans un système de transmission; elle permet de compenser la dispersion chromatique et la pente de dispersion chromatique d'une fibre du genre de celle proposée dans la demande n° 0002316 précitée, c'est-à-dire d'une fibre présentant à 1550 nm:

- une dispersion chromatique entre 5 et 11 ps/(nm.km) ;
- un rapport entre la dispersion chromatique et la pente de dispersion chromatique entre 250 et 370 nm;
- une pente de dispersion chromatique entre 0,01 et 0,04 ps/(nm$^2$.km);
- une surface effective entre 50 et 70 $\mu$m$^2$.

Dans un tel système, la fibre de l'invention représente sensiblement la moitié de la fibre de ligne, l'autre moitié de la fibre de ligne étant alors formée de la fibre décrite ci-dessus.

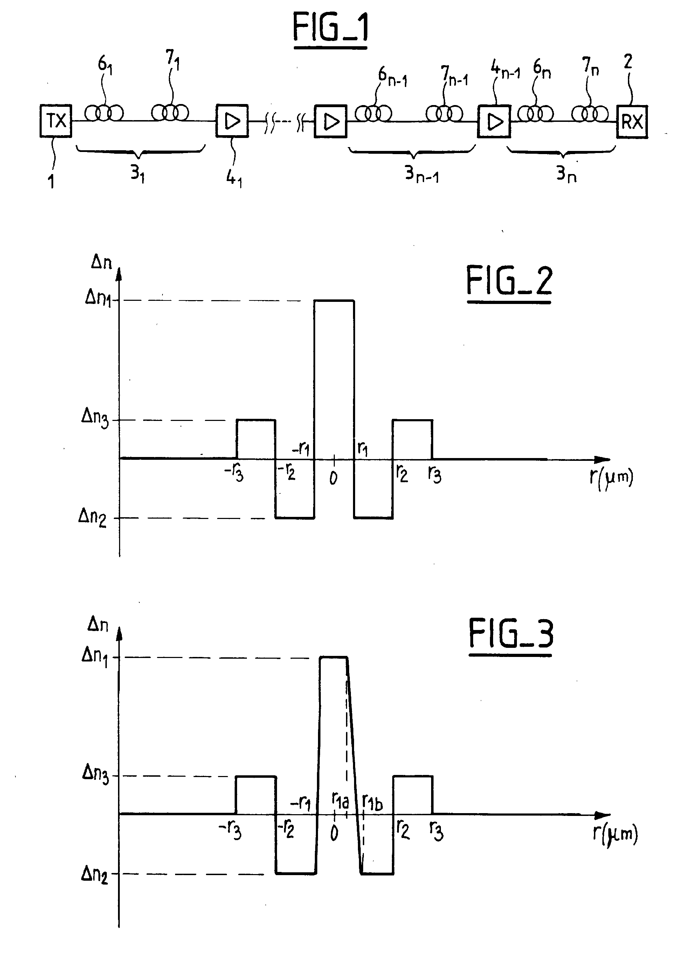

La figure 1 montre une représentation schématique d'un système de transmission à multiplexage en longueurs d'onde, dans lequel on utilise de la fibre selon l'invention en tant que fibre de ligne. On a représenté à la figure 2 l'émetteur TX 1 et le récepteur RX 2 du système de transmission, entre lesquels s'étend la fibre de ligne. Celle-ci est constituée de tronçons $3_1$ à $3_n$, séparés par des répéteurs $4_1$ à $4_{n-1}$; la structure des répéteurs est sans incidence sur l'invention et n'est pas décrite en détail ici. Entre deux répéteurs adjacents $4_{i-1}$ et $4_i$, un tronçon $3_i$ de fibre de ligne est constitué d'une section $6_i$ de fibre du type décrit dans la demande de brevet français précitée, et d'une deuxième section $7_i$ de fibre selon l'invention.

Dans un exemple, la fibre de la première section présente une dispersion chromatique à 1550 nm de 7,8 ps/(nm.km), et une pente de dispersion chromatique à la même longueur d'onde de 0,023 ps/(nm².km). La fibre de la deuxième section présente est une fibre selon le mode de réalisation n°3 décrit dans les tableaux 1, 2 et 3 ci-dessous et permet de compenser sur la plage de longueur d'onde du multiplex la dispersion chromatique cumulée dans la première section de fibre : dans ce cas, la fibre de la première section présente un rapport entre la dispersion chromatique et la pente de dispersion chromatique de 340 nm; la fibre de la deuxième section présente un rapport entre la dispersion chromatique et la pente de dispersion chromatique de 340 nm.

Le rapport des longueurs respectives $L_1$ et $L_2$ des fibres de la première et de la deuxième section est choisi de sorte à minimiser la dispersion chromatique cumulée sur la liaison, et dans l'exemple, peut être de l'ordre de 1, i. e. voisin de l'opposé de l'inverse du rapport des dispersions chromatiques $C_1$ et $C_2$.

On donne des exemples de longueurs possibles, pour des bandes de transmission différentes, sur une longueur totale de 100 km. Pour une utilisation du système de transmission en bande C, entre 1530 et 1565 nm (autour de 1550 nm), on peut considérer pour la première section de fibre une longueur $L_1$ de 51,38 km, et pour la deuxième section de fibre selon l'invention une longueur $L_2$ de 48,62 km, la dispersion chromatique cumulée pour le canal à 1550 nm du multiplex est proche de 0 ps/nm. Sur toute la bande C, la dispersion chromatique cumulée est inférieure en valeur absolue à 1 ps/nm pour chaque canal, pour les 100 km que forment les première et deuxième sections.

Si l'on utilise le système de transmission en bande C et en bande L, i.e. entre 1530 et 1620 nm, on peut prévoir des longueurs $L_1$ de 51,34 km et $L_2$ de 48,66 km. Dans ce cas, la dispersion chromatique cumulée pour le canal à 1550 nm du multiplex est proche de 0 ps/nm. Pour le canal à 1590 nm, elle est voisine de -1,4 ps/(nm.km). Sur toute la bande considérée, la dispersion chromatique cumulée sur les 100 km reste inférieure en valeur absolue à 2 ps/nm.

Si l'on utilise le système de transmission en bandes S, C et L, i.e. entre 1450 et 1620nm, on peut utiliser des longueurs $L_1$ de 53,04 km et $L_2$ de 46,96 km. Dans ce cas, la dispersion chromatique cumulée pour le canal à 1550 nm du multiplex est proche de 27 ps/nm. Pour le canal à 1590 nm, elle est voisine de 29 ps/(nm.km). Pour le canal à 1475 nm, elle est voisine de -6 ps/(nm.km). Sur toute la bande considérée, la dispersion chromatique cumulée sur les 100 km reste inférieure en valeur absolue à 40 ps/nm.

Enfin, pour une utilisation du système de transmission en bandes S, C, L et XL, i.e. entre 1450 et 1650nm, on peut utiliser des longueurs $L_1$ de 52,59 km et $L_2$ de 47,31 km. Dans ce cas, la dispersion chromatique cumulée pour le canal à 1550 nm du multiplex est proche de 20 ps/nm. Pour le canal à 1590 nm, elle est voisine de 21 ps/(nm. km). Pour le canal à 1475 nm, elle est voisine de -12 ps/(nm.km). Enfin, pour le canal à 1635nm, elle est voisine de 31 ps/(nm.km). Sur toute la bande considérée, la dispersion chromatique cumulée sur les 100 km reste inférieure en valeur absolue à 40 ps/nm.

Dans tous les cas, sur toute la bande possible de transmission, on arrive de la sorte à limiter la dispersion chromatique cumulée à des valeurs inférieures à 100 ps/nm, voire 50 ps/nm, pour chaque canal, en moyenne sur 100 km, comme indiqué plus haut.

Du fait des bonnes caractéristiques de propagation de la fibre de la demande de brevet précitée et de la fibre de l'invention, la liaison peut présenter des pertes linéiques inférieures à 0,25 dB/km voire à 0,23 dB/km; la surface effective peut être supérieure à 30 $\mu m^2$ sur l'ensemble de la liaison, ce qui limite les effets non-linéaires. De plus, compte tenu des caractéristiques de la fibre, il est facile d'obtenir des faibles dispersions modales de polarisation, typiquement inférieures ou égales à 0.1 ps.km$^{-1/2}$.

Le mode de réalisation de la figure 1 n'est qu'un exemple, qui est susceptible de variations. Ainsi, le rapport des longueurs des différentes sections de fibre peut différer de la valeur de 1 proposée dans l'exemple. Il est avantageux que le rapport présente une valeur comprise entre 0,8 et 1,2. Cette plage de valeur assure d'une part que la longueur de fibres à dispersion négative reste limitée à des longueurs du même ordre que celle de la fibre à dispersion positive, ce qui limite l'impact de l'atténuation et de la surface effective de la fibre à dispersion négative sur l'ensemble de la ligne. D'autre part, l'utilisation de longueurs plus importantes de fibre de compensation que dans les DCF habituellement utilisées permet une compensation de la dispersion sur une plus grande plage de longueur d'onde. La plage proposée est donc un compromis intéressant.

Dans l'exemple de la figure, chaque tronçon présente une section de fibre à dispersion chromatique positive, suivie d'une section de fibre selon l'invention à dispersion chromatique négative; il est bien entendu possible d'alterner les positions de ces deux sections, ou de prévoir un nombre de sections plus important. Il est toutefois avantageux que la dispersion chromatique cumulée dans la fibre de ligne soit aussi proche que possible de zéro au voisinage des répéteurs; ceci constitue une contrainte possible sur la longueur totale de fibre à dispersion chromatique positive et sur la longueur totale de fibre à dispersion chromatique négative entre deux répéteurs adjacents. Une telle solution n'est pas nécessairement adaptée, par exemple dans le cas où l'on prévoit une précompensation ou une post compensation du signal, c'est-à-dire dans les cas où les signaux transmis sont conditionnés en fonction de la dispersion chromatique attendue sur la liaison. Ainsi, on peut aussi prévoir dans l'émetteur TX ou dans le récepteur RX une partie agissant comme module de compensation.

Plus généralement, le nombre de sections de fibre d'une nature ou d'une autre entre deux répéteurs dépend de la valeur de dispersion chromatique cumulée acceptable à un point de la liaison. Il est clair dans l'exemple de la figure 1 que la dispersion chromatique cumulée est maximale au point de jonction entre la première et la deuxième section, et correspond sensiblement à la dispersion chromatique cumulée sur la première section. Remplacer les deux sections de longueurs $L_1$ et $L_2$ par quatre sections de longueurs $L_1/2$, $L_2/2$, $L_1/2$ et $L_2/2$ permet de diviser par deux la dispersion chromatique cumulée maximale atteinte dans le système de transmission.

Enfin, on peut faire varier les valeurs de dispersion chromatique proposées dans les exemples proposés plus haut.

Dans les exemples, sont considérées des transmissions en bande C, en bandes C et L, en bandes S, C et L, et en bandes S, C , L et XL. On peut utiliser d'autres bandes de transmission, par exemple la bande S ou L seule, la bande C et la bande S, ou encore toute combinaison des bandes S, C, L et XL.

L'utilisation d'une partie de la fibre dans un répéteur n'est pas un mode préféré de l'invention : toutefois, il n'est pas exclu de prévoir de courtes longueurs de cette fibre dans un répéteur. La fibre de l'invention permet donc de constituer des systèmes de transmission à très hauts débits, en multiplexage en longueurs d'onde, et permet par exemple d'atteindre des débits de N x 20 Gb/s, ou de N x 40 Gb/s, sur des plages de longueurs d'ondes variées et importantes.

On décrit maintenant les caractéristiques de la fibre de compensation de dispersion de l'invention, avant d'en donner un mode de réalisation. La fibre présente pour une longueur d'onde de 1550 nm une dispersion chromatique négative et une pente de dispersion chromatique négative, de sorte à pouvoir compenser la dispersion chromatique et la pente de dispersion chromatique de la fibre de la demande de brevet français précitée. La dispersion chromatique est comprise entre -12 et -4 ps/(nm.km). Le rapport entre la dispersion chromatique et la pente de dispersion chromatique peut prendre une valeur entre 250 et 370 nm.

Il est avantageux que la fibre présente aussi une ou plusieurs des caractéristiques suivantes :

- une longueur d'onde de coupure en câble inférieure à 1400nm voire à 1300nm.
- une surface effective supérieure à 20 $\mu m^2$, voire 30 $\mu m^2$, à 1550nm;
- des pertes par courbures, pour un enroulement de 100 tours sur un mandrin de 30mm de rayon, inférieures à 0.05 dB entre 1300 et 1620 nm, voire entre 1300 et 1650nm;
- des pertes par courbure inférieures ou égales à 100dB/m, pour un rayon de courbure de 10mm, pour des longueurs d'onde entre 1300 et 1620 nm, et de préférence entre 1300 et 1650nm;
- sensibilité aux micro-courbures inférieure à 1 entre 1300 et 1620 nm, nm, voire entre 1300 et 1650nm;
- une atténuation inférieure à 0,3 dB/km, voire 0,25dB/km;
- une dispersion modale de polarisation inférieure ou égale à 0,1 ps.km$^{-1/2}$.

Une longueur d'onde de coupure en câble inférieure à 1400nm assure un comportement monomode pour des longueurs d'onde supérieures à 1400nm, soit une propagation correcte de la lumière, i.e. l'absence d'un bruit modal qui limiterait fortement la bande passante, dans la fibre de l'invention, dans les bandes S, C, L ou XL utiles pour les transmissions à multiplexage en longueur d'onde. Une longueur d'onde de coupure en câble inférieure à 1300nm assure cette fois un comportement monomode pour des longueurs d'onde supérieures à 1300nm, soit une propagation correcte de la lumière dans la fibre de l'invention dans toute la bande de transparence de la Silice. En outre, en visant la valeur de la longueur d'onde de coupure la plus forte possible, on obtient des surfaces effectives importantes, toute autre chose - dispersion chromatique, pente de dispersion chromatique et câblabilité -restant égales par ailleurs. La valeur de la surface effective permet d'utiliser la fibre de l'invention comme fibre de ligne, sans que les pertes ou les effets non-linéaires dans le système de transmission ne deviennent trop importants.

Les pertes par courbure sont évaluées de façon connue en soi par enroulement de 100 tours de la fibre sur un mandrin de rayon de 30 mm et mesure des pertes induites par cet enroulement; la limite sur les pertes par courbure assure que la fibre de l'invention supporte la mise en câble comme dans le mode de réalisation de la figure 1. Une autre méthode de mesure consiste à enrouler la fibre sur une demi-boucle de rayon 10mm et à mesurer les pertes induites par cet enroulement. Dans ce dernier cas, le résultat donné est exprimé sous la forme d'une perte linéique en dB/m.

La sensibilité de la fibre aux micro-courbures est évaluée de façon relative, par rapport à la fibre commercialisée par la demanderesse sous la référence ASMF 200; on peut employer la méthode d'écrasement de la fibre entre deux grilles, connue en soi. La valeur de sensibilité aux micro-courbures proposée permet aussi d'améliorer la câblabilité de la fibre. En effet, limiter les pertes par micro-courbures permet de limiter les incréments d'atténuation de la fibre dans le câble. Ceci améliore la tenue de la fibre dans le câble.

La figure 2 montre une représentation schématique du profil d'indice de consigne d'une fibre selon l'invention; dans ce mode de réalisation, le profil d'indice est un profil d'indice du type en rectangle, avec une tranchée enterrée et un anneau, qui présente, en partant du centre de la fibre:

- une partie centrale avec un indice sensiblement constant supérieur ou égal à l'indice de la gaine;
- une partie annulaire d'indice inférieur ou égal à l'indice de la gaine ;

l'ensemble constituant un profil d'indice dit "en rectangle avec une tranchée enterrée ou déprimée".

Autour de la tranchée enterrée, la fibre de la figure 2 présente un anneau, c'est-à-dire une partie d'indice supérieur à l'indice de la gaine, d'où le qualificatif de profil en rectangle avec une tranchée enterrée et un anneau.

Les valeurs d'indices et de rayons dans le mode de réalisation de la figure 2 sont données dans le tableau 1. Le rectangle central présente un rayon $r_1$ et son indice présente avec l'indice de la gaine une différence $\Delta n_1$. La tranchée enterrée s'étend entre les rayons $r_1$ et $r_2$, et son indice présente avec l'indice de la gaine une différence $\Delta n_2$. Autour de la tranchée s'étend l'anneau, entre les rayons $r_2$ et $r_3$; elle présente par rapport à la gaine une différence d'indice $\Delta n_3$. Autour de l'anneau s'étend la gaine de la fibre, par rapport à laquelle sont mesurées les différences d'indice. Les valeurs de rayons sont données dans le tableau en $\mu m$ et les valeurs d'indice sont multipliées par $10^3$.

Tableau 1

| N° | $r_1$ | $r_2$ | $r_3$ | $10^3.\Delta n_1$ | $10^3.\Delta n_2$ | $10^3.\Delta n_3$ |
|---|---|---|---|---|---|---|
| 1 | 2,53 | 5,20 | 9,83 | 11,1 | -4,7 | 1,8 |
| 2 | 2,79 | 5,44 | 8,18 | 10,2 | -6,4 | 4,3 |
| 3 | 2,79 | 6,06 | 7,61 | 9,9 | -5,4 | 8,3 |

Dans tous les cas, les variations d'indice par rapport à la gaine sont comprises entre $-7.10^{-3}$ et $12.10^{-3}$; ces choix assurent que la fabrication de la fibre reste simple, et que les atténuations sont limitées.

Ces valeurs permettent d'obtenir une fibre présentant les caractéristiques de propagation données dans les tableaux 2 et 3, où :

- $\lambda_{cth}$ est la longueur d'onde de coupure théorique en nm;
- $S_{eff}$ est la surface effective à 1550 nm en $\mu m^2$;
- C est la dispersion chromatique à 1550 nm en ps/(nm.km);
- C' est la pente de dispersion chromatique à 1550 nm en ps/($nm^2$.km);
- C/C' est le rapport entre la dispersion chromatique et la pente de dispersion chromatique à 1550 nm, en nm;
- $2W_{02}$ est le diamètre de mode à 1550 nm, en $\mu m$;
- $PC30_C$ est la valeur des pertes par courbures à 1550 nm, en dB, obtenues après 100 tours de rayons 30mm
- $PC30_L$ est la valeur des pertes par courbures à 1620 nm, en dB, obtenues après 100 tours de rayons 30mm
- $PC30_{XL}$ est la valeur des pertes par courbures à 1650nm; en dB, obtenues après 100 tours de rayons 30mm;
- $PC10_C$ est la valeur des pertes par courbures à 1550 nm, en dB/m, obtenues en faisant le test de la demi-boucle de rayon 10mm;
- $PC10_L$ est la valeur des pertes par courbures à 1620 nm, en dB/m, obtenues en faisant le test de la demi-boucle de rayon 10mm;
- $PC10_{XL}$ est la valeur des pertes par courbures à 1650nm, en dB/m, obtenues en faisant le test de la demi-boucle de rayon 10mm;
- $S_{\mu c}$ est la sensibilité aux micro-courbures à 1550nm.

Tableau 2

| N° | $\lambda_{cth}$ nm | $S_{eff}$ $\mu m^2$ | C ps/(nm.km) | C' ps/($nm^2$.km) | C/C' Nm | $2W_{02}$ $\mu m$ |
|---|---|---|---|---|---|---|
| 1 | 1750 | 30.8 | -8,0 | -0,026 | 310 | 6,29 |

Tableau 2   (suite)

| N° | $\lambda_{cth}$ nm | $S_{eff}$ $\mu m^2$ | C ps/(nm.km) | C' ps/(nm$^2$.km) | C/C' Nm | $2W_{02}$ $\mu m$ |
|---|---|---|---|---|---|---|
| 2 | 1750 | 34,2 | -8,4 | -0,034 | 250 | 6,53 |
| 3 | 1750 | 36,5 | -8,5 | -0,025 | 340 | 6,71 |

Tableau 3

| N° | PC30$_C$ dB | PC30$_L$ dB | PC30$_{XL}$ dB | PC10$_C$ dB/m | PC10$_L$ dB/m | PC10$_{XL}$ DB/m | $S_{\mu c}$ |
|---|---|---|---|---|---|---|---|
| 1 | < 10$^{-5}$ | 1.10$^{-5}$ | 2.10$^{-4}$ | 1,1 | 13 | 31 | 0,25 |
| 2 | <10$^{-5}$ | 2.10$^{-5}$ | 2,10$^{-4}$ | 1,8 | 17 | 38 | 0,29 |
| 3 | <10$^{-5}$ | 6.10$^{-5}$ | 6.10$^{-4}$ | 3,1 | 25 | 52 | 0,38 |

En outre, dans ces exemples , les valeurs de la dispersion chromatique valent respectivement -6,5, -5,8 et -6,5 ps/(nm.km) à 1450 nm, et -11,1, -11,5 et -10,3 ps/(nm.km) à 1650 nm.

La longueur d'onde de coupure donnée ici est la longueur d'onde de coupure théorique; c'est la longueur d'onde calculée au-delà de laquelle seul le mode fondamental peut se propager (on peut se reporter pour plus de précisions à l'ouvrage de L.B. Jeunhomme intitulé « Single-Mode Fiber Optics, principles and applications », édition de 1990, pages 39 à 44).

La longueur d'onde de coupure en câble est la longueur d'onde de coupure mesurée sur une fibre de 20 m de longueur (pour plus de détails, on peut se reporter à la norme EIA/TIA-455-170). Dans la pratique, la longueur d'onde de coupure en câble est inférieure de plusieurs centaines de nm à la longueur d'onde de coupure théorique; on comprend que la fibre est effectivement monomode dans la plage de longueurs d'onde des signaux utiles.

Plus généralement, en faisant varier les paramètres suivants dans les fourchettes indiquées ci-après, on obtient des fibres ayant les caractéristiques de l'invention et le profil de consigne représenté à la figure 2 :

$$9,5.10^{-3} \leq \Delta n_1 \leq 11,6.10^{-3} \text{ et } 2,4 \ \mu m \leq r_1 \leq 2,9 \ \mu m$$

et de préférence :

$$-6,9.10^{-3} \leq \Delta n_2 \leq -3,1.10^{-3} \text{ et } 4,8 \ \mu m \leq r_2 \leq 6,9 \ \mu m$$

et de préférence encore :

$$1,5.10^{-3} \leq \Delta n_3 \leq 8,4.10^{-3} \text{ et } 7,5 \ \mu m \leq r_3 \leq 10,2 \ \mu m.$$

En outre, les profils optimisés pour obtenir les caractéristiques de l'invention vérifient les relations suivantes, où S, M1, M2, M3 et M4 sont définis par

$$S = 2 \int_0^{r_1} \Delta n(r) \, r.dr$$

$M_1 = S + K_1 \times r_2$, $K_1$ est un coefficient exprimé en $\mu m$ ;
$M_2 = -r_2^2 \Delta n_2 + K_2 \times r_3$, $K_2$ est un coefficient exprimé en $\mu m$ ;
$M_3 = S + K_3 \times \Delta n_2$, $K_3$ est un coefficient exprimé en $\mu m^2$ ;
$M_4 = r_2^2 \Delta n_2 + K_4 \times \Delta n_3$, $K_4$ est un coefficient exprimé en $\mu m^2$:

$$63,9.10^{-3} \ \mu m^2 \leq S \leq 81,7.10^{-3} \ \mu m^2$$

$$-201.10^{-3}\ \mu m^2 \leq (r_2)^2 x \Delta n_2 \leq -121.10^{-3}\ \mu m^2$$

$$7,0.10^{-3}\ \mu m \leq (r_3 - r_2) x \Delta n_3 \leq 13,0.10^{-3}$$

$$131.10^{-3}\ \mu m^2 \leq M_1 \leq 154.10^{-3}\ \mu m^2 \ \text{avec } K_1 = 12,3 \mu m$$

$$291.10^{-3}\ \mu m^2 \leq M_2 \leq 339.10^{-3}\ \mu m^2 \ \text{avec } K_2 = 18,2\ \mu m$$

$$53,1.10^{-3}\ \mu m^2 \leq M_3 \leq 67,7.10^{-3}\ \mu m^2 \ \text{avec } K_3 = 2,7\ \mu m^2$$

$$-156.10^{-3}\ \mu m^2 \leq M_4 \leq -85,9.10^{-3}\ \mu m^2 \ \text{avec } K_4 = 8,5 \mu m^2$$

La figure 3 montre une représentation schématique du profil d'indice de consigne d'une fibre selon un deuxième mode réalisation de l'invention. Le profil d'indice est un profil d'indice du type en trapèze, avec une tranchée enterrée et un anneau. La seule différence entre ce profil et celui représenté en figure 2 réside dans le fait que la partie centrale a une forme de trapèze et non de rectangle, avec un rayon minimum $r_{1a}$, un rayon maximum $r_{1b}$ et un rayon $r_1$ corres-pondant au rayon de la partie centrale au point où elle croise l'axe des abscisses. On peut aussi appeler "petite base du trapèze" la partie centrale de rayon $r_{1a}$ et d'indice constant supérieur à l'indice de la gaine. La "grande base du trapèze" correspond au rayon $r_{1b}$ sur la figure, et s'étend jusqu'au rayon intérieur de la tranchée enterrée.

Les paramètres et caractéristiques d'une fibre selon l'invention présentant un profil du type de celui de la figure 3 sont donnés dans les Tableaux 4, 5 et 6 ci-après. Les notations respectives sont les mêmes que dans les tableaux 1 à 3 ci-dessus.

Tableau 4

| N° | $r_{1a}/r_{1b}$ | $r_1$ | $r_2$ | $r_3$ | $10^3.\Delta n_1$ | $10^3.\Delta n_2$ | $10^3.\Delta n_3$ |
|---|---|---|---|---|---|---|---|
| 1 | 0,66 | 2,77 | 4,95 | 9,27 | 11,35 | -6,35 | 2,05 |
| 2 | 0,92 | 2,79 | 5,92 | 7,84 | 10,1 | -5,2 | 6,3 |

Tableau 5

| N° | $\lambda_{cth}$ (nm) | $S_{eff}$ ($\mu m^2$) | C (ps/nm/km) | C' (ps/nm$^2$/km) | C/C' (nm) | $2W_{02}$ ($\mu m$) |
|---|---|---|---|---|---|---|
| 1 | 1726 | 30,3 | -8,3 | -0,029 | 285 | 6,24 |
| 2 | 1752 | 35,3 | -7,7 | -0,0245 | 316 | 6,64 |

Tableau 6

| N° | $PC30_C$ dB | $PC30_L$ DB | $PC30_{XL}$ dB | $PC10_C$ dB/m | $PC10_L$ dB/m | $PC10_{XL}$ dB/m | $S_{\mu c}$ |
|---|---|---|---|---|---|---|---|
| 1 | $<10^{-5}$ | $< 10^{-5}$ | $8.10^{-5}$ | 0,6 | 8 | 20 | 0,22 |
| 2 | $<10^{-5}$ | $2.10^{-5}$ | $2.10^{-4}$ | 1,6 | 14 | 31 | 0,31 |

En outre, dans ces exemples, les valeurs de la dispersion chromatique valent respectivement -6,5 et -5,9 ps/(nm.km) à 1450 nm, et -11,7 et -9,8 ps/(nm.km) à 1650 nm.

Les plages de rayons et d'indices définies ci-dessus pour le profil de la figure 2 en rectangle avec tranchée enterrée et anneau s'appliquent également au profil d'indice de la figure 3 (en prenant pour r, la nouvelle définition donnée ci-dessus). A ces plages s'ajoute avantageusement une plage permettant de définir le rapport $r_{1a}/r_{1b}$ :

$$0,8 \leq r_{1a}/r_{1b} \leq 1.$$

dans laquelle le rapport égal à 1 correspond au cas du rectangle.

On peut aussi utiliser un profil avec un trapèze ayant des flancs encore plus inclinés. Dans ce cas, il est avantageux que le profil vérifie les lois suivantes :

$$0{,}6 \leq r_{1a}/r_{1b} \leq 0{,}8.$$

$$9{,}8.10^{-3} \leq \Delta n_1 \leq 11{,}6.10^{-3} \text{ et } 2{,}5\ \mu m \leq r_1 \leq 2{,}9\ \mu m$$

et de préférence :

$$-7{,}0.10^{-3} \leq \Delta n_2 \leq -3{,}2.10^{-3} \text{ et } 4{,}7\ \mu m \leq r_2 \leq 7{,}0\ \mu m$$

et de préférence encore :

$$1{,}5.10^{-3} \leq \Delta n_3 \leq 8{,}5.10^{-3} \text{ et } 7{,}5\ \mu m \leq r_3 \leq 10{,}2\ \mu m.$$

En outre, les profils optimisés pour obtenir les caractéristiques de l'invention vérifient les relations suivantes, où $S$, $N_1$, $N_2$, $N_3$ et $N_4$ sont définis par

$$S = 2\int_{0}^{r_1} \Delta n(r) \, r.dr$$

$N_1 = S + Q_1 \times r_2$, $Q_1$ est un coefficient exprimé en µm ;
$N_2$ par $N_2 = -r_2^2 \Delta n_2 + Q_2 \times r_3$, $Q_2$ est un coefficient exprimé en µm;
$N_3$ par $N_3 = S + Q_3 \times \Delta n_2$, $Q_3$ est un coefficient exprimé en µm ;
$N_4$ par $N_4 = r_2^2 \Delta n_2 + Q_4 \times \Delta n_3$, $Q_4$ est un coefficient exprimé en µm :

$$64{,}0.10^{-3}\ \mu m^2 \leq S \leq 76{,}0.10^{-3}\ \mu m^2$$

$$-197.10^{-3}\mu m^2 \leq (r_2)^2 \times \Delta n_2 \leq -128.10^{-3}\ \mu m^2$$

$$7{,}1.10^{-3}\ \mu m \leq (r_3 - r_2) \times \Delta n_3 \leq 13{,}0.10^{-3}$$

$$104{,}5.10^{-3}\ \mu m^2 \leq N_1 \leq 121{,}5.10^{-3}\ \mu m^2 \text{ avec } Q_1 = 8{,}0\mu m$$

$$292.10^{-3}\ \mu m^2 \leq N_2 \leq 335.10^{-3}\ \mu m^2 \text{ avec } Q_2 = 17{,}6\mu m$$

$$49{,}5.10^{-3}\ \mu m^2 \leq N_3 \leq 60{,}5.10^{-3}\ \mu m^2 \text{ avec } Q_3 = 2{,}45\mu m^2$$

$$-159.10^{-3}\ \mu m^2 \leq N_4 \leq -91.10^{-3}\ \mu m^2 \text{ avec } Q_4 = 8{,}8\mu m^2$$

La fibre de l'invention peut être fabriquée par l'homme du métier à l'aide de techniques connues, comme le MCVD, l'OVD ou les autres techniques couramment utilisées pour la fabrication des fibres optiques.

Bien entendu, la présente invention n'est pas limitée aux exemples et modes de réalisation décrits et représentés, mais elle est susceptible de nombreuses variantes accessibles à l'homme de l'art. Il est clair que le profil des figures 2 et 3 et les exemples de rayons et d'indices ne sont donnés qu'à titre d'exemple, et que d'autres profils peuvent permettre d'obtenir des fibres présentant les caractéristiques de l'invention. La fibre de l'invention peut être utilisée comme dans le mode de réalisation de la figure 1 dans un système de transmission à répéteurs, mais aussi dans un système de transmission sans répéteurs.

**Revendications**

1. Une fibre optique présentant pour une longueur d'onde de 1550 nm une dispersion chromatique entre -12 et -4 ps/(nm.km) et un rapport entre la dispersion chromatique et la pente de dispersion chromatique entre 250 et 370 nm.

2. La fibre de la revendication 1, **caractérisée en ce qu'**elle présente pour une longueur d'onde de 1550 nm une surface effective supérieure à 20 $\mu m^2$, de préférence supérieure où égale à 30 $\mu m^2$.

3. La fibre de la revendication 1 ou 2, **caractérisée en ce qu'**elle présente pour des longueurs d'onde entre 1300 et 1620 nm, et de préférence entre 1300 et 1650nm, des pertes par courbure inférieures ou égales à 0,05 dB, de préférence inférieures ou égales à 0,001 dB après un enroulement de 100 tours autour d'un mandrin de 30mm de rayon.

4. La fibre de la revendication 1 ou 3, **caractérisée en ce qu'**elle présente pour des longueurs d'onde entre 1300 et 1620 nm, et de préférence entre 1300 et 1650nm, des pertes par courbure inférieures ou égales à 100dB/m, pour un rayon de courbure de 10mm.

5. La fibre de la revendication là 4, **caractérisée en ce qu'**elle présente pour des longueurs d'onde entre 1300 et 1620 nm, et de préférence entre 1300 et 1650nm, une sensibilité aux micro-courbures inférieure ou égale à 1, et de préférence inférieure ou égale à 0,5.

6. La fibre de l'une des revendications 1 à 5, **caractérisée en ce qu'**elle présente pour des longueurs d'onde entre 1300 et 1620 nm, et de préférence entre 1300 et 1650nm, une atténuation inférieure ou égale à 0,30 dB/km, et de préférence inférieure ou égale à 0,25 dB/km.

7. La fibre de l'une des revendications 1 à 6, **caractérisée en ce qu'**elle présente une longueur d'onde de coupure en câble inférieure ou égale à 1400 nm, de préférence inférieure ou égalè à 1300 nm.

8. La fibre de l'une des revendications 1 à 6, **caractérisée en ce qu'**elle présente une dispersion modale de polarisation inférieure ou égale à 0,1 ps.km$^{-1/2}$.

9. La fibre de l'une des revendications 1 à 8, **caractérisée en ce qu'**elle présente un profil d'indice en rectangle ou trapèze avec une tranchée enterrée et un anneau.

10. La fibre de la revendication 9, **caractérisée en ce que** l'indice ($\Delta n_1$) de la partie centrale de la fibre en trapèze ou en rectangle est compris entre $9,5.10^{-3}$ et $11,6.10^{-3}$, et **en ce que** le rayon ($r_1$) de la partie centrale de la fibre d'indice supérieur à l'indice de la gaine est compris entre 2,4 et 2,9 $\mu m$.

11. La fibre de la revendication 9 ou 10, **caractérisée en ce que** l'indice ($\Delta n_2$) de la tranchée enterrée est compris entre $-6,9.10^{-3}$ et $-3,1.10^{-3}$, et **en ce que** le rayon extérieur ($r_2$) de cette tranchée enterrée est compris entre 4,8 et 6,9 $\mu m$.

12. La fibre de la revendication 9, 10 ou 11, **caractérisée en ce que** l'indice ($\Delta n_3$) de l'anneau est compris entre $1,5.10^{-3}$ et $8,4,10^{-3}$, et **en ce que** le rayon extérieur ($r_3$) de cet anneau est compris entre 7,5 et 10,2 $\mu m$.

13. La fibre de l'une des revendications 9 à 12, **caractérisée en ce qu'**elle présente une partie centrale en trapèze, et **en ce que** le rapport entre le rayon ($r_{1a}$) de la petite base du trapèze et le rayon ($r_{1b}$) de la grande base du trapèze est compris entre 0,8 et 1.

14. La fibre de l'une des revendications 1 à 8, **caractérisée en ce qu'**elle présente un profil d'indice en trapèze avec une tranchée enterrée et un anneau et **en ce que** le rapport entre le rayon ($r_{1a}$) de la petite base du trapèze et le rayon ($r_{1b}$) de la grande base du trapèze est compris entre 0,6 et 0,8.

15. La fibre de la revendication 14, **caractérisée en ce que** l'indice ($\Delta n_1$) de la partie centrale de la fibre en trapèze est compris entre $9,8.10^{-3}$ et $11,6.10^{-3}$, et **en ce que** le rayon ($r_1$) de la partie centrale de la fibre d'indice supérieur à l'indice de la gaine est compris entre 2,5 et 2,9 μm.

16. La fibre de la revendication 14 ou 15, **caractérisée en ce que** l'indice ($\Delta n_2$) de la tranchée enterrée est compris entre $-7,0.10^{-3}$ et $-3,2.10^{-3}$, et **en ce que** le rayon extérieur ($r_2$) de cette tranchée enterrée est compris entre 4,7 et 7,0 μm.

17. La fibre de la revendication 14, 15 ou 16, **caractérisée en ce que** l'indice ($\Delta n_3$) de l'anneau est compris entre $1,5.10^{-3}$ et $8,5.10^{-3}$, et **en ce que** le rayon extérieur ($r_3$) de cet anneau est compris entre 7,5 et 10,2 μm.

18. Utilisation d'une fibre de l'une des revendications 1 à 17 comme fibre de compensation de dispersion dans un système de transmission à fibre optique à multiplexage en longueur d'onde.

19. Utilisation de la revendication 18, la fibre de compensation étant câblée et utilisée comme fibre de ligne.

20. Un système de transmission à fibre optique à multiplexage en longueur d'onde, comprenant une première section ($6_i$) de fibre de ligne, et une deuxième section ($7_i$) de fibre de ligne de l'une des revendications 1 à 17.

21. Le système de transmission de la revendication 20, **caractérisé en ce que** la fibre de ligne de la première section présente pour une longueur d'onde de 1550 nm une dispersion chromatique entre 5 et 11 ps/(nm.km).

22. Le système de transmission de la revendication 20 ou 21, **caractérisé en ce que** la fibre de ligne de la première section présente pour une longueur d'onde de 1550 nm une pente de dispersion chromatique entre 0,01 et 0,04 ps/(nm$^2$.km).

23. Le système de transmission de la revendication 20, 21 ou 22, **caractérisé en ce que** la fibre de ligne de la première section présente pour une longueur d'onde de 1550 nm une surface effective entre 50 et 70 μm$^2$.

24. Le système de transmission de la revendication 20 à 23, **caractérisé en ce que** la fibre de ligne de la première section présente pour une longueur d'onde de 1550 nm un rapport de la dispersion chromatique à la pente de dispersion chromatique entre 250 et 370 nm.

25. Le système de transmission de l'une des revendications 20 à 24, **caractérisé en ce que** le rapport de la longueur de la première section à la longueur de la seconde section est sensiblement l'inverse de la valeur absolue du rapport des dispersions chromatiques à 1550 nm des fibres de la première section et de la deuxième section.

26. Le système de transmission de l'une des revendications 20 à 24, **caractérisé en ce que** la dispersion chromatique cumulée pour une longueur d'onde entre 1450 et 1620 nm, de préférence entre 1450 et 1650nm est inférieure à 100 ps/nm, et de préférence inférieure à 50 ps/nm, en moyenne sur 100 km de transmission.

## FIG_1

## FIG_2

## FIG_3

EP 1 202 088 A1

Office européen
des brevets

**RAPPORT DE RECHERCHE EUROPEENNE**

Numéro de la demande

EP 01 40 2628

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | EP 1 030 199 A (CIT ALCATEL) 23 août 2000 (2000-08-23) * abrégé; figure 1 * * page 4, ligne 30 – page 8, ligne 34 * | 1-26 | G02B6/16 |
| A | EP 0 668 520 A (AT & T CORP) 23 août 1995 (1995-08-23) * le document en entier * | 1-26 | |
| A | WO 99 42869 A (CORNING INC ;LIU YANMING (US)) 26 août 1999 (1999-08-26) * abrégé; figures 1,2; exemple 1 * | 1-26 | |
| A | ANTOS A J ET AL: "DESIGN AND CHARACTERIZATION OF DISPERSION COMPENSATING FIBER BASED ON THE LP01 MODE" JOURNAL OF LIGHTWAVE TECHNOLOGY, IEEE. NEW YORK, US, vol. 12, no. 10, 1 octobre 1994 (1994-10-01), pages 1739-1744, XP000469527 ISSN: 0733-8724 * le document en entier * | 1-26 | |
| | | | **DOMAINES TECHNIQUES RECHERCHES (Int.Cl.7)** |
| | | | G02B |
| A | US 5 995 694 A (AKASAKA YOUICHI ET AL) 30 novembre 1999 (1999-11-30) * abrégé; figure 1 * * colonne 2, ligne 39 – ligne 67 * | 1-26 | |

Le présent rapport a été établi pour toutes les revendications

| Lieu de la recherche | Date d'achèvement de la recherche | Examinateur |
|---|---|---|
| LA HAYE | 20 février 2002 | Faderl, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

14

**ANNEXE AU RAPPORT DE RECHERCHE EUROPEENNE
RELATIF A LA DEMANDE DE BREVET EUROPEEN NO.**          EP 01 40 2628

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-02-2002

| Document brevet cité au rapport de recherche | | | Date de publication | Membre(s) de la famille de brevet(s) | | | Date de publication |
|---|---|---|---|---|---|---|---|
| EP | 1030199 | A | 23-08-2000 | FR | 2790107 | A1 | 25-08-2000 |
| | | | | EP | 1030199 | A1 | 23-08-2000 |
| | | | | EP | 1046069 | A1 | 25-10-2000 |
| | | | | WO | 0017681 | A1 | 30-03-2000 |
| EP | 0668520 | A | 23-08-1995 | US | 5448674 | A | 05-09-1995 |
| | | | | EP | 0668520 | A2 | 23-08-1995 |
| | | | | JP | 7270636 | A | 20-10-1995 |
| WO | 9942869 | A | 26-08-1999 | AU | 3180599 | A | 06-09-1999 |
| | | | | BR | 9907943 | A | 24-10-2000 |
| | | | | CN | 1288523 | T | 21-03-2001 |
| | | | | EP | 1066540 | A1 | 10-01-2001 |
| | | | | WO | 9942869 | A1 | 26-08-1999 |
| US | 5995694 | A | 30-11-1999 | CA | 2208393 | A1 | 21-12-1997 |
| | | | | JP | 10073738 | A | 17-03-1998 |

EPO FORM P0460

Pour tout renseignement concernant cette annexe : voir Journal Officiel de l'Office européen des brevets, No.12/82